# EUROPEAN PATENT SPECIFICATION

(11) **EP 2 504 972 B1**
(45) Date of publication and mention of the grant of the patent: **26.03.2014**
(21) Application number: 10793319.4
(22) Date of filing: 18.11.2010
(51) Int. Cl.: H04L 29/06, H04M 7/00, H04M 7/12

(54) **METHOD AND NODE FOR ROUTING A CALL WHICH HAS SERVICES PROVIDED BY A FIRST AND SECOND NETWORKS**
VERFAHREN UND KNOTEN ZUM ROUTEN EINES ANRUFES MIT VON EINEM ERSTEN UND EINEM ZWEITEN NETZWERK BEREITGESTELLTEN DIENSTEN
PROCÉDÉ ET NOEUD DE ROUTAGE D'UN APPEL AUQUEL SONT ASSOCIÉS DES SERVICES FOURNIS PAR DES PREMIER ET SECOND RÉSEAUX

(30) Priority: 24.11.2009 US 264016 P; 06.04.2010 US 754957
(43) Date of publication of application: 03.10.2012
(73) Proprietor: Telefonaktiebolaget L M Ericsson (PUBL), 164 83 Stockholm (SE)
(72) Inventor: HIRAB, Mahdi, Pierrefonds, Québec H9A 1K9 (CA)
(74) Representative: Röthinger, Rainer
(86) International application number: PCT/IB2010/055278
(87) International publication number: WO 2011/064699

(56) References cited:
- EP-A1- 2 034 688
- WO-A1-03/001836
- 3GPP: "3rd Generation Partnership Project;Technical Specification Group Services and System Aspects;IP Multimedia Subsystem (IMS) Centralized Services; Stage 2(Release 8)", 3GPP DRAFT; 23292-800-GENERAL_EDITORIALS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20080618, 18 June 2008 (2008-06-18), XP050266567, [retrieved on 2008-06-18]

## Description

### Technical Field

The present invention relates to communication networks and more particularly to routing calls in such networks.

### Background

The IP Multimedia Subsystem (IMS) is an architectural framework for delivering Internet Protocol (IP) multimedia services. It was originally designed by the wireless standards body 3rd Generation Partnership Project (3GPP), as a part of the vision for evolving mobile networks beyond GSM. Its original formulation (3GPP R5) represented an approach to delivering "Intemet services" over GPRS.

Basically, the IMS network allows for an integration or convergence of networks in order to facilitate the use of IP packets for wireless and landline services, such as telephony, fax, email, internet access, web services, Voice over IP (VOIP), instant messaging (IM), videoconferencing, Video on Demand (VoD), etc.

The ideal for many network operators is to migrate to a full IMS centric network to offer their services.

However, existing network operators are not yet interested in an IMS centric solution only: for example, they would rather like to leverage on their existing investments in Circuit Switch (CS) services.

For example, in terms of supplementary services, some supplementary services are provided by the CS network and some other supplementary services are provided by the IMS network for a same user, who has multiple devices. For instance, a user that has a mobile phone and a Personal Computer (PC) client, for instance, would have the CS network providing some services to the mobile phone and the IMS network providing other services to the PC client. It is understandable that the set of supplementary services offered for the mobile phone differs from the set of supplementary services offered to the PC-Client. However, there are some supplementary services which co-exist in the IMS and CS networks, such as Call Baning, Line Identity (ID) Presentation/Restriction, Mid-Call services, etc. Also, some network operators would like to keep a mix of two different phone numbers: one number for the mobile phone and one number for the fixed phone, thus they wish to have a mix of services in the IMS and CS networks.

Therefore, there is a need to offer services from both an IMS and CS networks and to integrate both networks together.

EP 2 034 688 A1 may be construed to disclose a method and apparatus for transmitting request messages in a SIP multimedia system. S-CSCF entity forwards a request message according to a routing way of the SIP message after receiving a request message that meets the preset conditions; or performs initial filter criteria matching for the request message if the request message does not meet the preset conditions. The S-CSCF entity judges whether the received request message meets the preset conditions, and, if the received request message meets the preset conditions, the S-CSCF entity ignores the matching of initial filter criteria against the request message and sends the request message to the corresponding NE.

WO 03/001836 A1 may be construed to disclose a method and system for providing interworking between a first and a second network of different types, preferably an IMS and a CS (Circuit-Switched) network. A call received by the first network and directed to a terminal unregistered from the first network, is forwarded to the second network, whereas when the call is received by the second network and is directed to a terminal unregistered from the second network, the call is not forwarded to the first network. The same identifier, preferably the same E.164 number, is used in both networks for identifying the called terminal. Preferably, the first network is informed on the registration of the terminal to the second network, the first network using this information as basis for the decision whether or not to route a call to the second network.

### SUMMARY

There are provided a method and a communication node according to the independent claims.

Developments are as set forth in the respective dependent claims.

Preferably, there is provided a method for routing a call having services provided by a first network and a second network. Preferably, the method comprises: receiving the call in the first network; correlating the first network with the second network for the call; and sending the call to the second network. Preferably, the correlation between the first network and the second network allows the call for returning back to the first network from the second network, after the services provided by the second network have been applied.

Preferably, there is provided a communication node for routing a call having services provided by a first network and a second network. Preferably, the communication node comprises: an input for receiving the call in the first network; a generator of a correlation between the first and second networks for the call; and an output for sending the call to the second network. Preferably, the correlation between the first and second networks allows the call for returning back to the first network from the second network, after the services provided by the second network have been applied.

### Brief Description of the Drawings

Figure 1 is a schematic architecture of a communication system which offers services to users from a first network and second network, according to an embodiment of the present invention;
Figure 2 is a flow chart illustrating a method for routing a call having services provided by a first network and a second network, according to an embodiment of the present invention;
Figure 3 shows an example of a SIP INVITE header according to an embodiment of the present invention;
Figure 4 is a flow chart showing a detailed method of the method of Figure 2; and
Figure 5 shows a communication node for routing a call having services provided by a first network and a second network, according to an embodiment of the present invention.

### Detailed Description

Before going further into the description, a list of acronyms used throughout the description is given for clarity purposes.

### Acronym list

BGCF - Breakout Gateway Control Function
CAMEL - Customized Applications for Mobile networks Enhanced Logic
CS - Circuit Switched
CSCF - Call Session Control Function
GMSC - Gateway Mobile Switching Center
HLR - Home Location Register
HSS - Home Subscriber Server
ICA - Initiated Call Establishment
IAM - Initial Address Message
IMS - Internet protocol (IP) Multimedia Subsystem
I-CSCF - Interrogating-Call Session Control Function
MGCF - Media Gateway Controller Function
MGW - Media Gateway
O-CSI- Originating CAMEL Subscription Information
P-CSCF - Proxy- Call Session Control Function
S-CSCF - Service-Call Session Control Function
T-CSI - Terminating CAMEL Subscription Information
VMSC - Visited Mobile Switching Center

Generally stated, embodiments of the present invention allow a network operator to offer services from both a first network, such as for example an IP Multimedia Subsystem (IMS) network, and a second network, such as for example a Circuit Switch (CS) network, during a same call. For example, in a multi-device environment, a user has a plurality of devices, such as a mobile phone, a fixed phone, a computer, etc., that belong to him/her. Using a so-called One-Number functionality, i.e. using a single number to reach the plurality of devices of the user, services offered to the mobile phone differ from those offered to the fixed phone or the computer. The services offered to the mobile phone are usually executed by the CS network, and the services offered to the computer (or alternatively e.g. to a smartphone or PDA device) are usually performed by the IMS network. If another user calls this number, both the fixed phone and mobile phone will start ringing.

In order to provide services from both the first and second networks, a correlation between those two networks is generated. The correlation allows the call to return back to the first network after being sent to the second network, where the services have been executed/applied. For example, by correlating an incoming terminating IMS leg with an incoming terminating CS leg for a call issued by an IMS-enabled device to a device connected to a CS network, services can be offered to a terminating device from both the IMS and CS networks. A telephony application server can be used to provide such a correlation, as will be described hereinbelow.

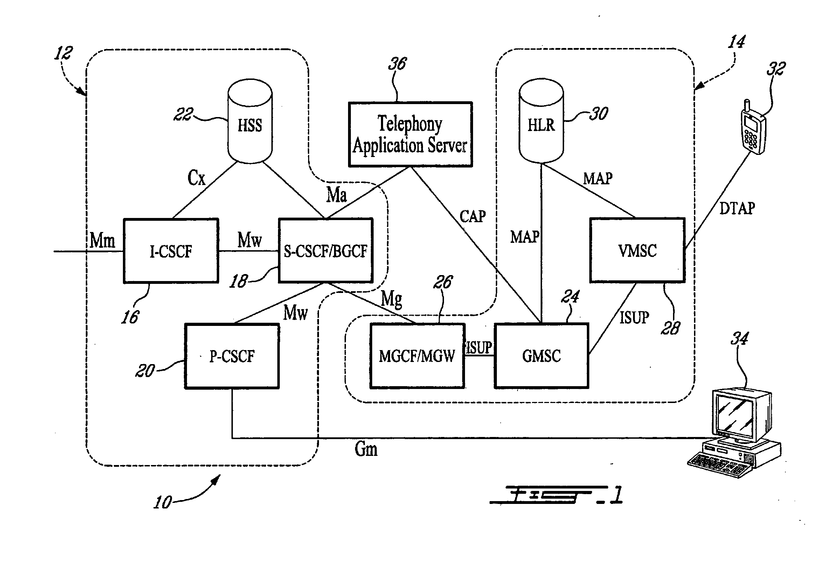

Figure 1 shows an exemplary architecture of a communication system 10 which offers services to a call issued by a device connected to a first network to a device connected to a second network. The first network can be an IMS network or a CS network. The second network can be a CS network or an IMS network.

For example, the communication system 10 of Figure 1 may comprise an IMS network 12 and a CS network 14. The IMS network 12 can be represented by different functionalities, which are interconnected with each other as illustrated in Figure 1, such as an I-CSCF 16, for receiving messages from outside the IMS network 12, a S-CSCF/BGCF 18, for switching, signaling, session control and services purposes, a P-CSCF 20 for registration and authentication purposes and a HSS 22, a database comprising the profiles of the users and their status. It should be noted that IMS networks are well-known in the art and thus will not be further described. The IMS network 12 offers services such as Presence, Location-based services, etc., in addition to supplementary services.

The communication system 10 also includes the CS network 14, which can be represented by different functionalities, which are interconnected to each other as shown in Figure 1, such as a GMSC 24, for carrying the switching functions, a MGCF/ MGGW 26, a gateway for linking the CS network 14 with the IMS network 12 (thus the MGCF/MGGW 26 is connected to the S-CSCF/BGCF 18 and the GMSC 24), a VMSC 28, for visiting users, and a HLR 30, a database to store users' information. In this case, the example of the CS network 14 illustrated in Figure 1 is the GSM network, which is well-known in the art and thus will not be described further. Of course, other CS networks, such as a CDMA network can be implemented as well.

Furthermore, as illustrated in Figure 1, a mobile phone 32 is connected to the CS network 14 through the VMSC 28 and a terminal or device 34, such as a computer or a SIP phone, is connected to the IMS network 12, through the P-CSCF 20. It is assumed that both the mobile phone 32 and the terminal 34 belong to a same user.

Also, a Telephony Application Sever (T-AS) 36, as illustrated in Figure 1, can be provided in the communication system 10 for providing the correlation between the first and second networks during a same call, as will be described hereinbelow. The T-AS 36 may be a stand-alone node that connects to the IMS network 12 and further to the CS network 14, for example. However, people skilled in the art would understand that other implementations are also possible, for example, the T-AS 36 can be co-located in a node within the IMS network 12 or the CS network 14.

Furthermore, a user can set service rules in the T-AS 36. For example, if parallel alerting/ringing for the mobile phone 32 and the terminal 34 is set by the user, then, when a call is made to the user, the T-AS 36 will initiate one call towards each IMS registered device, i.e. in this example, the terminal 34, and towards each device connected to the CS network 12, i.e. the mobile phone 32 of the user in this case.

As mentioned earlier, the user can have some terminated services in a first network and some in a second network. The first network can be the CS network 14 or the IMS network 12 and the second network can be the IMS network 12 or the CS network 14.

If it is assumed that the first network is the IMS network 12 and the second network is the CS network 14, then in this case, according to an exemplary embodiment of the present invention, when a device, such as for example the IMS-enabled terminal 34, calls the mobile phone 32 of the user, the initiated call leg from the IMS network 12 to the CS network 14 comes back to the IMS network 12 so that the IMS centric services and the CS services will be executed/applied for the same call. To do so, a correlation between the IMS network 12 and the CS network 14 is created in the call.

The Voice Call Continuity TS 23.206 defined by 3GPP defines a method on how to anchor a call, such as a voice call, to either an IMS or CS domain but not to both domains at the same time. In contrast, according to an exemplary embodiment of the present invention, it is possible to anchor the call in the IMS and CS networks at the same time and receive some services, such as supplementary services, in the IMS network and some other in the CS network, as will be explained hereinbelow.

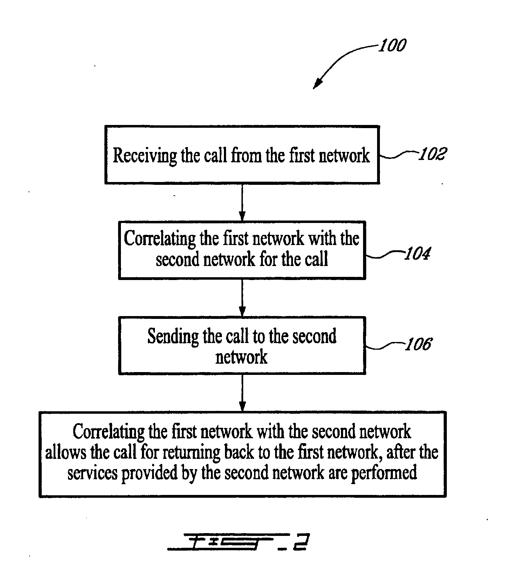

Figure 2 shows a schematic diagram illustrating a method 100 for routing a call having services provided by a first network and a second network. The method 100 starts with step 102 wherein the first network receives the call. Step 102 may also comprise the step related to a communication node, such as the T-AS 36, receiving the call from the first network.

In step 104, a correlation between the first network and the second network for the call is performed through the communication node, such as the T-AS 36, for example, which may be located in the first network, or connected thereto.

Then, in step 106, the first network sends the call to the second network.

It should be noted that the correlation between the first network and the second network allows the call for returning back to the first network from the second network, after the services provided by the second network have been applied.

The services that are provided by the first network can be applied when the first network first receives the call, i.e. before sending the call to the second network. Alternatively, the first network can also apply its services for the call when it receives the call back from the second network.

Once the services in the first and second networks are applied, the call is sent out from the first network to the destination device/terminal to which it is directed.

The correlation can be generated by the communication node, through a generator, for example. More specifically, the generator generates a correlation number, which can be referred to as an IMS correlation number (IMCN), in the case when the call is initiated by an IMS-enabled device to a device connected to the CS network 14. The generated correlation number is inserted in the call, or more specifically in the header of the call. When initiating a call using SIP, a SIP INVITE request is generated, for requesting a session. In this case, the generated correlation number is inserted in the SIP INVITE header.

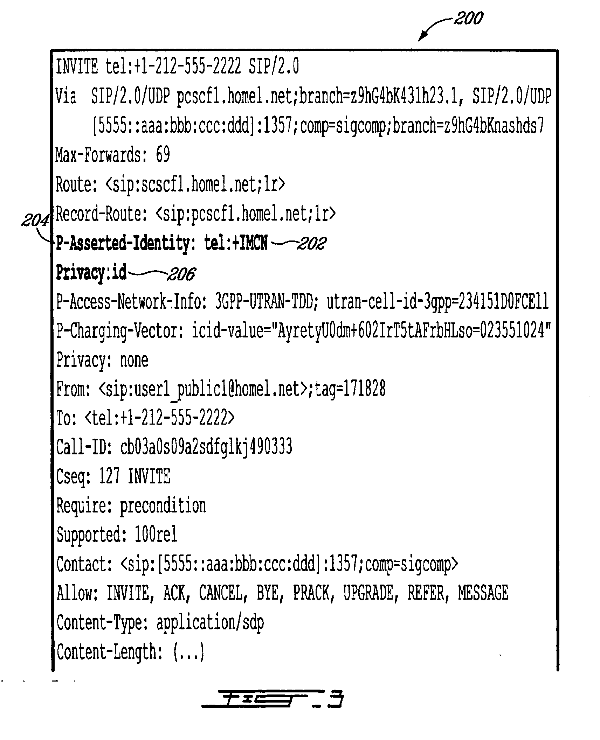

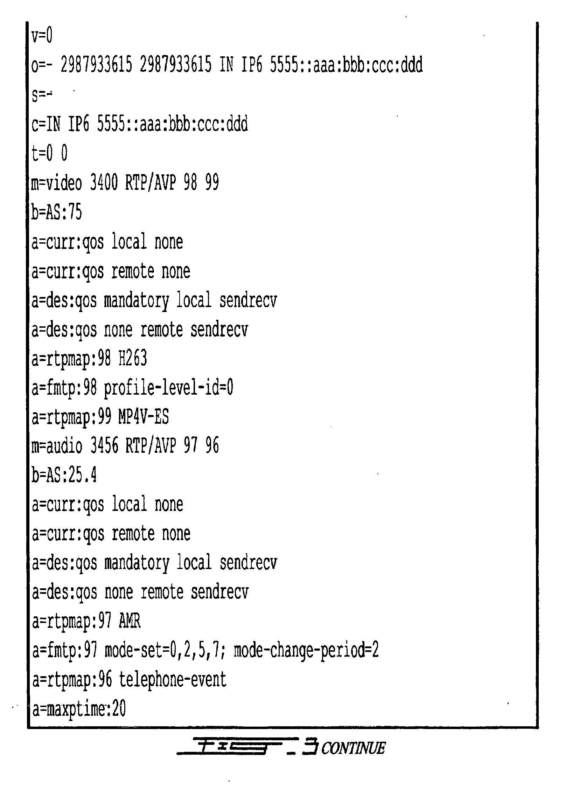

Figure 3 shows an example of the header of a SIP INVITE request 200 comprising the generated correlation number 202. The generated correlation number 202 may be set in the P-Asserted-Identity parameter 204 (or alternatively in any other suitable location), which provides the real identity of the caller. Also, the Privacy parameter 206 can be set to "Id", so that the generated correlation number 202 is made private, i.e. it is a network provided number and will not be shown in any of a user's terminals. The rest of the parameters in the SIP INVITE header 200 are well-known in the art and thus will not be further detailed.

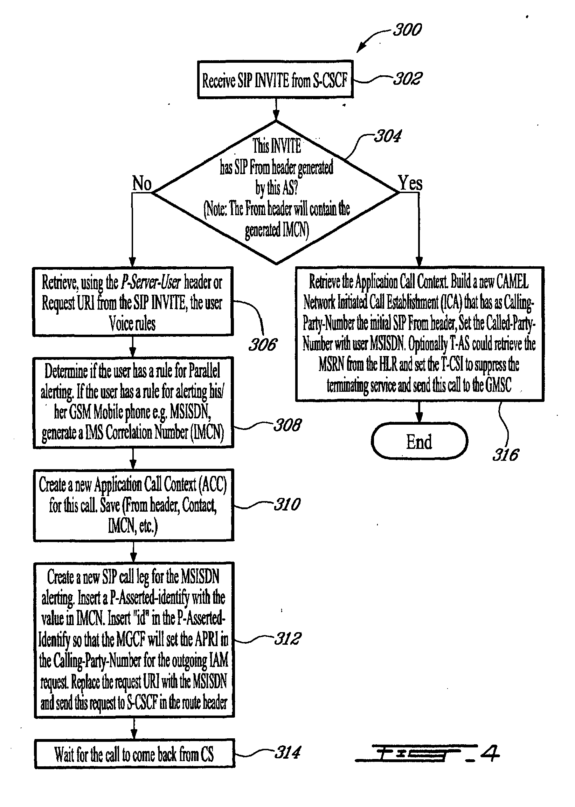

Now turning to Figure 4, a detailed example (method 300) of the routing method 100 of Figure 2 is described. In this example, it is assumed that the first network is the IMS network 12 and the second network is the CS network 14.

When an IMS-enabled device from a user A, for example, places a call towards a user B, who has services provided by the CS network 14 and the IMS network 12, the call is first received by the IMS network 12. Indeed, a SIP INVITE is received by the S-CSCF/BGCF 18 for establishing a session between the user A and the user B. Then, the S-CSCF/BGCF 18 forwards the SIP INVITE to the T-As 36.

Method 300 starts when the T-AS 36 receives the SIP INVITE from the S-CSCF/BGCF 18. In step 304, the T-AS 36 verifies if the called user (user B) has been already serviced by the current T-AS 36.

If not, then in step 306, the T-AS 36 checks if the incoming IMS leg for the call will need to be sent to the CS network 12 to which the mobile phone 32 is connected. To do so, the T-AS 36 retrieves the voice or service rules of user B, by using the P-Server-User parameter or Request URI from the received SIP INVITE header.

After retrieving the voice or service rules, the T-AS 36 determiners if user B has a service rule about parallel ringing/alerting, for example, in step 308. If positive, meaning that the incoming IMS call is to be sent to the CS network 12 too (this connection forming the outgoing leg from the IMS network 12 to the CS network 14), then, the T-AS 36 generates a correlation between the IMS network 12 and the CS network 14, which can be provided by using a correlation number, such as the IMS correlation number (*IMCN*) 202. This number is a return indication to tell the call to come back to the first network from the second network, for example. Of course, people skilled in the art would understand that other forms for indicating a correlation can be also used.

In step 310, the T-AS 36 creates a new Application Call Context (ACC) for this call. The ACC is used to save, for example, the original sender user A in the "SIP From" header of the call, contacts, and the correlation number 202, etc.

In step 312, a new SIP INVITE is created, in which the correlation number (IMCN) 202 can be set in the P-Asserted-Identity parameter 204 of the header for the new outgoing IMS leg toward the CS network 14. The T-AS 36 can also set the "Id" for the privacy parameter 206 so that when the MGCF 26 receives the new SIP INVITE, it will set it in the Calling-Party-Number with APRI (Address Presentation Restricted Indicator) information which indicates to the MSC to hide the calling party number. When the call is routed back by the CS network 14 to the IMS network 12, as specified by the correlation number 202, using T-CSI, for example, the T-AS 36 retrieves the application call context, using the "SIP From" header, which contains the correlation number 202. Then, more specifically, the T-AS 36 will generate a CAMEL ICA which will now have the original "SIP From" header as the Calling-number and the called number will be the user B's MSISDN. Alternatively, the T-AS can request from the HLR 30 the MSRN (Mobile Station Routing Number) and the ICA to the GMSC 24 with a Suppress T-CSI. It should be noted that people skilled in the art know the details for establishing a call using different standards such as CAMEL and protocols in a CS network 14 and IMS network 12, and thus the specific steps of such a process will not be detailed further.

In step 314, after sending the new SIP INVITE, from the S-CSCF/BGCF 18, to the CS network 14, the T-AS 36 waits for the call to come back to the IMS network 12 from the CS network 14. Finally, the IMS network 12 sends the call to the mobile phone 32. The mobile phone 32 connected to the CS network 12 will be then alerted.

When the call is received in the CS network 12 from the IMS network 14, services in the CS network 12 are executed/applied. When the call is routed back from the CS network 12 to the IMS network 14, services in the IMS network 14 are executed/ applied.

By having a correlation relationship between the CS network 12 and the IMS network 14, IMS services can be executed as well as CS services for the same call.

Back to step 304, if the T-AS 36 verifies that the called user (user B) has been already serviced by the current T-AS 36, meaning that the received SIP INVITE header already comprises the correlation number 202, then the T-AS 36 retrieves the ACC which contains the correlation number 202 and creates a new CAMEL ICA that has as calling-party-number the initial "SIP From" header, and sets the Called-Party-Number with the MSISDN of user B. The new CAMEL ICA is then sent to the mobile phone 32, which will be alerted.

Even though the example of an IMS-enabled device calling a device connected to the CS network 14 has been described hereinabove, people skilled in the art would readily understand that a device connected to the CS network 14 can also initiate a call to an IMS-enabled device and using a correlation between the 2 networks, services from the CS network and the IMS network can be applied for the same call.

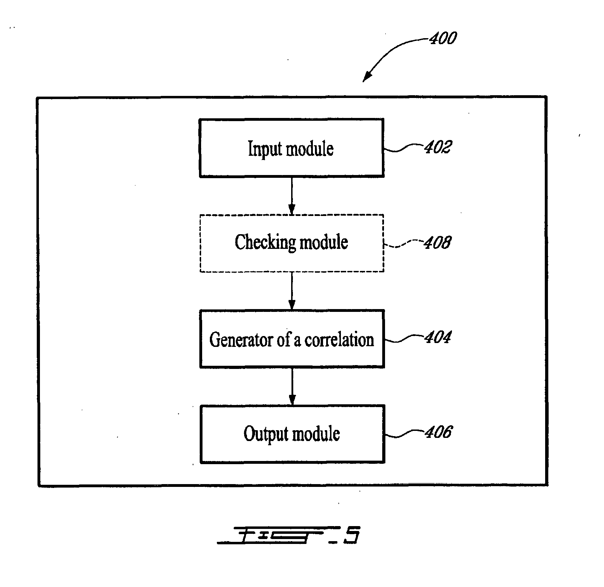

Now, turning to Figure 5, a communication node 400, such as the T-AS 36, for routing a call having services provided by a first network and a second network, will be described.

The communication node 400 comprises an input module 402, a generator of a correlation 404, an output module 406, and a checking module 408.

The input module 402 allows for receiving a call request, such as a SIP INVITE from the first network.

The generator 404 generates a correlation between the first and second networks and inserts the generated correlation in the call request. The correlation can be provided by a correlation number. More specifically, if the call request is a SIP request, the generator 404 can generate a new SIP header in which the generated correlation number is contained.

The output module 406 allows for sending out a new call request, containing the correlation. The output 406 can also send out the call which has returned back from the second network to the first network to a terminal to which the call is directed.

The checking module 408 allows for checking the voice rules of the user who is being called. The voice rules may comprise parallel alerting and other rules.

The communication node 400 can further comprise a plurality of other components (not shown), such as a processor or memory, for performing tasks and procedures of the present invention and other usual tasks and procedures well known in the art. For example, the memory can provide an application call context, in which the generated correlation number is saved.

Advantages of the communication system according to the embodiments of the present invention include offering flexible services in IMS networks and CS networks.

Modifications and other embodiments of the disclosed invention will come to mind to one skilled in the art having the benefit of the teachings presented in the foregoing description and the associated drawings. Therefore, it is to be understood that the invention is not to be limited to the specific embodiments disclosed and that modifications and other embodiments are intended to be included within the scope of appended claims. Although specific terms may be employed herein, they are used in a generic and descriptive sense only and not for purposes of limitation.

## Claims

1. A method (100) for routing a call request having services provided by a first network (12, 14) and a second network (14, 12), the method comprising:
- receiving (102) the call request from the first network;
**characterized by**:
- correlating (104) the first network with the second network for the call request; and
- sending (106) the call request to the second network;
wherein correlating the first network with the second network comprises generating a correlation number (202) which is inserted in a header of the call request, the correlation number indicating the call request to return to the first network from the second network, after the services provided by the second network have been applied to the call request.

2. A method as defined in claim 1, wherein:
- the first network comprises an IP Multimedia Subsystem, IMS, network and the second network comprises a Circuit Switched, CS, network, or
the first network comprises a Circuit Switched, CS, network and the second network comprises an IP Multimedia Subsystem, IMS, network.

3. A method as defined in claim 1, further comprising applying the services in the first network after receiving the call request in the first network and before sending the call request to the second network.

4. A method as defined in claim 1, further comprising applying the services in the first network after receiving the call request which has returned back from the second network to the first network.

5. A method as defined in claim 4, further comprising sending the returned call request from the first network to a terminal (32) to which the call request is directed.

6. A method as defined in claim 1, wherein the correlation number is a private number, which is not seen by a terminal (32) to which the call request is directed.

7. A method as defined in claim 1, further comprising checking voice rules for the call request, after receiving the call request in the first network and before sending the call request to the second network.

8. A method as defined in claim 7, wherein checking voice rules of the call request comprises checking for parallel alerting of multiple devices belonging to a same user.

9. A method as defined in claim 1, wherein generating the correlation number further comprises saving the generated correlation number in an application call context.

10. A method as defined in claim 1, further comprising creating a new Session Initiation Protocol, SIP, header for the call request containing the generated correlation number.

11. A method as defined in claim 1, wherein the services comprise supplementary services.

12. A communication node (400) for routing a call request having services provided by a first network (12, 14) and a second network (14, 12), the communication node comprising:
- an input module (402) configured to receive the call request in the first network;
**characterized by**:
- a generator (404) of a correlation between the first and second networks for the call request;
- wherein the generator is adapted to generate a correlation number (202) and to insert this correlation number in a header of the call request, the correlation number indicating the call request to return to the first network from the second network, after the services provided by the second network have been applied to the call request; and
- an output module (406) configured to send the call request to the second network.

13. A communication node as defined in claim 12, wherein the first network comprises a Circuit Switched (CS) network and the second network comprises an IMS (IP Multimedia Subsystem) network.

14. A communication node as defined in claim 12, wherein the services in the first network are applied after receiving the call request in the first network and before sending the call request to the second network.

15. A communication node as defined in claim 12, further comprising a checking module (406) configured to check voice rules for the call request, after receiving the call request in the first network and before sending the call request to the second network.

## Patentansprüche

1. Verfahren (100) zum Verkehrslenken einer Rufanforderung, die Dienste aufweist, die durch ein erstes Netzwerk (12, 14) und ein zweites Netzwerk (14, 12) bereitgestellt werden, wobei das Verfahren umfasst:
- Empfangen (102) der Rufanforderung aus dem ersten Netzwerk; **gekennzeichnet durch**:
- Korrelieren (104) des ersten Netzwerks mit dem zweiten Netzwerk für die Rufanforderung; und
- Senden (106) der Rufanforderung zu dem zweiten Netzwerk;
wobei das Korrelieren des ersten Netzwerks mit dem zweiten Netzwerk Erzeugen einer Korrelationsnummer (202) umfasst, die in einen Header der Rufanforderung eingefügt wird, wobei die Korrelationsnummer die Rufanforderung angibt, die zu dem ersten Netzwerk aus dem zweiten Netzwerk zurückzugeben ist, nachdem die **durch** das zweite Netzwerk bereitgestellten Dienste auf die Rufanforderung angewendet wurden.

2. Verfahren gemäß Anspruch 1, wobei:
- das erste Netzwerk ein IP-Multimedia-Untersystem-, IMS, -Netzwerk umfasst und das zweite Netzwerk ein schaltungsvermitteltes, CS, Netzwerk umfasst, oder
das erste Netzwerk ein schaltungsvermitteltes, CS, Netzwerk umfasst, und das zweite Netzwerk ein IP-Multimediauntersystem-, IMS, -Netzwerk umfasst.

3. Verfahren gemäß Anspruch 1, weiterhin umfassend Anwenden der Dienste in dem ersten Netzwerk nach dem Empfangen der Rufanforderung in dem ersten Netzwerk und vor dem Senden der Rufanforderung zu dem zweiten Netzwerk.

4. Verfahren gemäß Anspruch 1, weiterhin umfassend Anwenden der Dienste in dem ersten Netzwerk nach dem Empfangen der Rufanforderung, die aus dem zweiten Netzwerk zu dem ersten Netzwerk zurückgegeben wurde.

5. Verfahren gemäß Anspruch 4, weiterhin umfassend Senden der zurückgegebenen Rufanforderung aus dem ersten Netzwerk zu einem Endgerät (32), an das die Rufanforderung gerichtet ist.

6. Verfahren gemäß Anspruch 1, wobei die Korrelationsnummer eine private Nummer ist, die durch ein Endgerät (32) nicht zu sehen ist, an das die Rufanforderung gerichtet ist.

7. Verfahren gemäß Anspruch 1, weiterhin umfassend Prüfen von Sprachregeln für die Rufanforderung nach dem Empfangen der Rufanforderung in dem ersten Netzwerk und vor dem Senden der Rufanforderung zu dem zweiten Netzwerk.

8. Verfahren gemäß Anspruch 7, wobei das Prüfen der Sprachregeln der Rufanfoderung ein Prüfen für ein paralleles Alarmgeben von mehreren Vorrichtungen ist, die einem gleichen Benutzer gehören.

9. Verfahren gemäß Anspruch 1, wobei das Erzeugen der Korrelationsnummer weiterhin umfasst Speichern der erzeugten Korrelationsnummer in einem Anwendungsrufkontext.

10. Verfahren gemäß Anspruch 1, weiterhin umfassend Erstellen eines neuen Sitzungsinitüerungsprotokoll-, SIP, -Headers für die Rufanforderung, die die erzeugte Korrelationsnummer umfasst.

11. Verfahren gemäß Anspruch 1, wobei die Dienste ergänzende Dienste umfassen.

12. Kommunikationsknoten (400) zum Verkehrslenken einer Rufanforderung, die Dienste aufweist, die durch ein erstes Netzwerk (12, 14) und ein zweites Netzwerk (14, 12) bereitgestellt sind, wobei der Kommunikationsknoten umfasst:
- ein Eingabemodul (402), das konfiguriert ist, um die Rufanforderung in dem ersten Netzwerk zu empfangen;
**gekennzeichnet durch**:
- eine Erzeugungseinrichtung (404) einer Korrelation zwischen dem ersten und zweiten Netzwerk für die Rufanforderung,
wobei die Erzeugungseinrichtung eingerichtet ist, um eine Korrelationsnummer (202) zu erzeugen und diese Korrelationsnummer in einen Header der Rufanforderung einzufügen;
- wobei die Korrelationsnummer die Rufanforderung angibt, die zu dem ersten Netzwerk aus dem zweiten Netzwerk zurückzugeben ist, nachdem die Dienste, die **durch** das zweite Netzwerk bereitgestellt sind, auf die Rufanforderung angewendet wurden; und
- ein Ausgabemodul (406), das konfiguriert ist, um die Rufanforderung zu dem zweiten Netzwerk zu senden.

13. Kommunikationsknoten gemäß Anspruch 12, wobei das erste Netzwerk ein schaltungsvermitteltes (CS) Netzwerk umfasst und das zweite Netzwerk ein IMS- (IP-Multimediauntersystem) -Netzwerk umfasst.

14. Kommunikationsknoten gemäß Anspruch 12, wobei die Dienste in dem ersten Netzwerk nach dem Empfangen der Rufanforderung in dem ersten Netzwerk und vor dem Senden der Rufanforderung zu dem zweiten Netzwerk angewendet werden.

15. Kommunikationsknoten gemäß Anspruch 12, weiterhin umfassend ein Prüfmodul (406), das konfiguriert ist, um Sprachregeln für die Rufanforderung zu prüfen, nach dem Empfangen der Rufanforderung in dem ersten Netzwerk und vor Senden der Rufanforderung zu dem zweiten Netzwerk.

## Revendications

1. Procédé (100) pour acheminer une demande d'appel ayant des services fournis par un premier réseau (12, 14) et un deuxième réseau (14, 12), le procédé comprenant :
- la réception (102) de la demande d'appel en provenance du premier réseau ;
**caractérisé par** :
- la corrélation (104) du premier réseau avec le deuxième réseau pour la demande d'appel ; et
- l'envoi (106) de la demande d'appel au deuxième réseau ;
dans lequel la corrélation du premier réseau avec le deuxième réseau comprend la génération d'un numéro de corrélation (202) qui est inséré dans un en-tête de la demande d'appel ; le numéro de corrélation indiquant à la demande d'appel de revenir du deuxième réseau au premier réseau après que les services fournis par le deuxième réseau ont été appliqués à la demande d'appel.

2. Procédé selon la revendication 1, dans lequel :
- le premier réseau comprend un réseau de sous-système multimédia IP, IMS, et le deuxième réseau comprend un réseau à commutation de circuits, CS, ou
- le premier réseau comprend un réseau à commutation de circuits, CS, et le deuxième réseau comprend un réseau de sous-système multimédia IP, IMS.

3. Procédé selon la revendication 1, comprenant en outre l'application des services dans le premier réseau après la réception de la demande d'appel dans le premier réseau et avant l'envoi de la demande d'appel au deuxième réseau.

4. Procédé selon la revendication 1, comprenant en outre l'application des services dans le premier réseau après la réception de la demande d'appel qui est revenue du deuxième réseau au premier réseau.

5. Procédé selon la revendication 4, comprenant en outre l'envoi de la demande d'appel revenue au premier réseau à un terminal (32) vers lequel la demande d'appel est dirigée.

6. Procédé selon la revendication 1, dans lequel le numéro de corrélation est un numéro privé qui n'est pas visible par un terminal (32) vers lequel la demande d'appel est dirigée.

7. Procédé selon la revendication 1, comprenant en outre le contrôle de règles vocales pour la demande d'appel, après la réception de la demande d'appel dans le premier réseau et avant l'envoi de la demande d'appel au deuxième réseau.

8. Procédé selon la revendication 7, dans lequel le contrôle des règles vocales de la demande d'appel comprend la recherche d'alertes parallèles de plusieurs dispositifs appartenant à un même utilisateur.

9. Procédé selon la revendication 1, dans lequel la génération du numéro de corrélation comprend en outre l'enregistrement du numéro de corrélation généré dans un contexte d'appel d'application.

10. Procédé selon la revendication 1, comprenant en outre la création d'un nouvel en-tête de protocole d'ouverture de session, SIP, pour la demande d'appel contenant le numéro de corrélation généré.

11. Procédé selon la revendication 1, dans lequel les services comprennent des services supplémentaires.

12. Noeud de communication (400) pour acheminer une demande d'appel ayant des services fournis par un premier réseau (12, 14) et un deuxième réseau (14, 12), le noeud de communication comprenant :
- un module d'entrée (402) configuré pour effectuer la réception de la demande d'appel dans le premier réseau ;
**caractérisé par** :
- un générateur (404) d'une corrélation entre le premier réseau et le deuxième réseau pour la demande d'appel ;
- dans lequel le générateur est apte à générer un numéro de corrélation (202) et à insérer ce numéro de corrélation dans un en-tête de la demande d'appel, le numéro de corrélation indiquant à la demande d'appel de revenir du deuxième réseau au premier réseau après que les services fournis par le deuxième réseau ont été appliqués à la demande d'appel ; et
- un module de sortie (406) configuré pour effectuer l'envoi de la demande d'appel au deuxième réseau.

13. Noeud de communication selon la revendication 12, dans lequel le premier réseau comprend un réseau à commutation de circuits, CS, et le deuxième réseau comprend un réseau de sous-système multimédia IP, IMS.

14. Noeud de communication selon la revendication 12, dans lequel les services dans le premier réseau sont appliqués après la réception de la demande d'appel dans le premier réseau et avant l'envoi de la demande d'appel au deuxième réseau.

15. Noeud de communication selon la revendication 12, comprenant en outre un module de contrôle (406) configuré pour effectuer le contrôle de règles vocales pour la demande d'appel, après la réception de la demande d'appel dans le premier réseau et avant l'envoi de la demande d'appel au deuxième réseau.
